# EUROPÄISCHE PATENTSCHRIFT

(11) **EP 2 473 888 B1**
(45) Veröffentlichungstag und Bekanntmachung des Hinweises auf die Patenterteilung: **18.04.2018**
(21) Anmeldenummer: 10747617.8
(22) Anmeldetag: 25.08.2010
(51) Int. Cl.: G05B 19/409

(54) **BEDIENGERÄT MIT ANZEIGE**
OPERATING DEVICE HAVING A DISPLAY
APPAREIL DE COMMANDE À ÉCRAN DE VISUALISATION

(30) Priorität: 31.08.2009 DE 102009039387
(43) Veröffentlichungstag der Anmeldung: 11.07.2012
(73) Patentinhaber: Tridonic GmbH & Co KG, 6851 Dornbirn (AT); Zumtobel Lighting GmbH, 6850 Dornbirn (AT)
(72) Erfinder: NEYER, Michael, A-6700 Bludenz (AT); SEVERIN, Dieter, A-6890 Lustenau (AT); VOGGESSER, Manfred, A-6850 Dornbirn (AT); FLATZ, Daniel, A-6890 Lustenau (AT); MATTHAE, Philipp, A-6700 Bludenz (AT)
(74) Vertreter: Thun, Clemens
(86) Internationale Anmeldenummer: PCT/EP2010/062411
(87) Internationale Veröffentlichungsnummer: WO 2011/023730

(56) Entgegenhaltungen:
- EP-A1- 2 017 804
- WO-A1-2009/024228
- US-A1- 2008 078 921
- ROLAND MAURER: "Hart im Nehmen" E&E, [Online] 31. März 2008 (2008-03-31), - 31. März 2008 (2008-03-31) Seiten 57-59, XP002607486 EuE24.net Gefunden im Internet: URL:http://www.eue24.net/pi/index.php?Stor yID=253&articleID=123555> [gefunden am 2010-10-27]
- Anonymous: "Flat Touch"[Online] 8. Juni 2008 (2008-06-08), Seiten 1-2, XP002607488 Kohlstädt GmbH Gefunden im Internet: URL:http://web.archive.org/web/20080608024 940/www.kohlstaedt.de/touchintegration/fla t-touch.html> [gefunden am 2010-10-27]

## Beschreibung

Die Erfindung betrifft Bediengerät zum Steuern von einem oder vorzugsweise mehreren elektrisch steuerbaren Aktoren, beispielsweise Leuchten (d.h. deren Betriebsgeräte) und/oder Jalousien mit Mitteln zum Senden von Steuersignalen zur Steuerung der Aktoren und wenigstens einem Betätigungselement, wobei das Bediengerät dazu ausgelegt ist, bei einer Betätigung des Betätigungselements ein Steuersignal zu senden und wobei das Betätigungselement derart angeordnet ist, dass es von einer Frontseite des Bediengeräts aus betätigt werden kann.

Ein derartiges Bediengerät ist aus der DE 10 2007 039 610 A1 bekannt. Dieses bekannte Bediengerät weist auf seiner Frontseite eine Abdeckung mit einer Öffnung auf, in die ein kreisförmiger Drehregler eingreift. Aufgrund dieser Öffnung besteht die Gefahr, dass Schmutzpartikel oder dergleichen in das Innere des Bediengeräts eindringen und in der Folge die Wirkungsweise des Geräts beeinträchtigen.

In dem Artikel von Roland Maurer: "Hart im Nehmen" (E&E, [Online] 31. März 2008, Seiten 57-59) sind Touchpanels beschrieben, die einen, an einer Trägerplatte gehalterten Touch Screen aufweisen, auf dessen Oberfläche eine durchgängige Frontfolie aufgeklebt ist.

Der Erfindung liegt die Aufgabe zu Grunde, ein entsprechendes Bediengerät anzugeben, das besonders sicher und zuverlässig funktioniert.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist ein Bediengerät zum Steuern von mehreren elektrisch steuerbaren Aktoren, beispielsweise Leuchten (d.h. deren Betriebsgeräte) und/oder Jalousien vorgesehen, das Mittel zum Senden von Steuersignalen zur Steuerung der Aktoren aufweist. Weiterhin weist das Bediengerät wenigstens ein Betätigungselement auf, wobei das Bediengerät dazu ausgelegt ist, bei einer Betätigung des Betätigungselements ein Steuersignal zu senden und wobei das Betätigungselement derart angeordnet ist, dass es von einer Frontseite des Bediengeräts aus betätigt werden kann. Außerdem weist das Bediengerät ein Display zur Unterstützung einer Bedienung des Bediengeräts auf. Die Frontseite des Bediengeräts ist durch eine durchgehend geschlossene Platte gebildet und das Display ist in einem innerhalb von der Platte liegenden Bereich des Bediengeräts angeordnet. Das Betätigungselement ist dabei zwischen der Platte und dem Display angeordnet und zumindest teilweise transparent.

Durch die durchgehend geschlossene Platte ist ein Eindringen von Schmutzpartikeln und dergleichen zuverlässig verhindert. Das Display ist daher besonders gut geschützt. Das Bediengerät ist damit weniger anfällig gegenüber Beschädigungen. Insgesamt ist damit das Bediengerät somit besonders zuverlässig und sicher.

Vorteilhaft ist die Platte eine Kunststoff- oder Glasplatte.

Vorteilhaft umfasst das Display eine OLED (organische Licht emittierende Diode). Das Display kann auch durch eine OLED gebildet sein.

Dadurch, dass das Betätigungselement zwischen der Platte und dem Display angeordnet ist und zumindest teilweise transparent ist, ist ermöglicht, dass das Display und das Betätigungselement gleichsam "verschmelzen". Das Betätigungselement kann insbesondere - bei Blick auf die Frontseite - mit dem Display überlappend angeordnet sein. Hierdurch ist eine besonders intuitive Handhabung bei der Betätigung des Betätigungselements ermöglicht.

Erfindungsgemäß umfasst das Bediengerät eine kapazitive Folie, wobei ein Bereich oder ein Segment der Folie einen Teil des Betätigungselements darstellt oder das Betätigungselement als solches bildet.

Vorteilhaft umfasst das Bediengerät außerdem ein weiteres Betätigungselement, wobei ein weiterer Bereich bzw. ein weiteres Segment der kapazitiven Folie einen Teil des weiteren Betätigungselements darstellt oder das weitere Betätigungselement als solches bildet. Es kann also vorgesehen sein, dass - bei Blick auf die Frontseite - hinter der Platte die kapazitive Folie angeordnet ist und hinter der Folie das Display, wobei die Folie segmentiert ist, so dass jedem der beiden Betätigungselemente jeweils ein Segment zugeordnet ist. Natürlich können dabei auch entsprechend mehr als zwei Betätigungselemente vorgesehen sein, wobei die Anzahl der Betätigungselemente dementsprechend gleich der Anzahl der Segmente der Folie ist.

Erfindungsgemäß stellt das Betätigungselement einen Regler bzw. Stellelement dar, wobei der Bereich bzw. das Segment der kapazitiven Folie mehreren unterschiedlichen einstellbaren Regelzuständen entsprechend weiter in Unterbereiche bzw. Untersegmente unterteilt ist. Ein Regler eignet sich beispielsweise besonders zur Einstellung einer Helligkeit eines von einer Leuchte abgegebenen Lichts. Dabei ist eine besonders intuitive Handhabung ermöglicht, wenn - wie erfindungsgemäß vorgesehen - das Betätigungselement bzw. der Regler ringförmig ist. Beispielsweise kann vorgesehen sein, dass der Regler - bei Blick auf die Frontseite - kreisringförmig ist.

Dabei ist es weiterhin für eine haptisch besonders angenehme Betätigung des Betätigungselements vorteilhaft, die Ringform - wie erfindungsgemäß vorgesehen - gegenüber der umgebenden frontseitigen Oberfläche der Platte durch eine Oberflächenstrukturierung abzugrenzen. Die Ringform kann also durch eine Vertiefung der Platte, eine Mattierung, Rillen etc. markiert sein. Alternativ ist auch eine entsprechende Erhebung bzw. Erhöhung zur Hervorhebung des Betätigungselements möglich.

Weiterhin vorteilhaft umfasst das Bediengerät einen Helligkeitssensor zur Erfassung einer Helligkeit eines Umgebungslichts, wobei das Bediengerät dazu ausgelegt ist, eine Helligkeit des Displays und/oder einer Beleuchtung des Betätigungselements in Abhängigkeit von der erfassten Helligkeit zu regeln. Hierdurch kann eine gute Erkennbarkeit einer Anzeige auf dem Bediengerät bei unterschiedlichen Umgebungshelligkeiten gewährleistet werden.

Weiterhin vorteilhaft weist das Bediengerät eine Spannungsversorgung und eine Hardware für eine Buskommunikation zu den Aktoren auf, wobei die Platte mittels einer mechanisch lösbaren Verbindung mit der Spannungsversorgung und der Hardware verbindbar ist.

Die Vorteile des Bediengeräts kommen besonders zum Tragen, wenn das Bediengerät zur Montage an einer Wand vorgesehen ist.

Die Erfindung wird im Folgenden anhand eines Ausführungsbeispiels und mit Bezug auf die Zeichnungen näher erläutert. Es zeigen:
- Fig. 1: eine Ansicht auf eine Frontseite eines Ausführungsbeispiels eines erfindungsgemäßen Bediengeräts,
- Fig. 2: eine der Fig. 1 entsprechende Skizze einer Frontansicht,
- Fig. 3: eine entsprechende Skizze einer Ansicht von oben und
- Fig. 4: eine entsprechende Skizze eines Querschnitts.

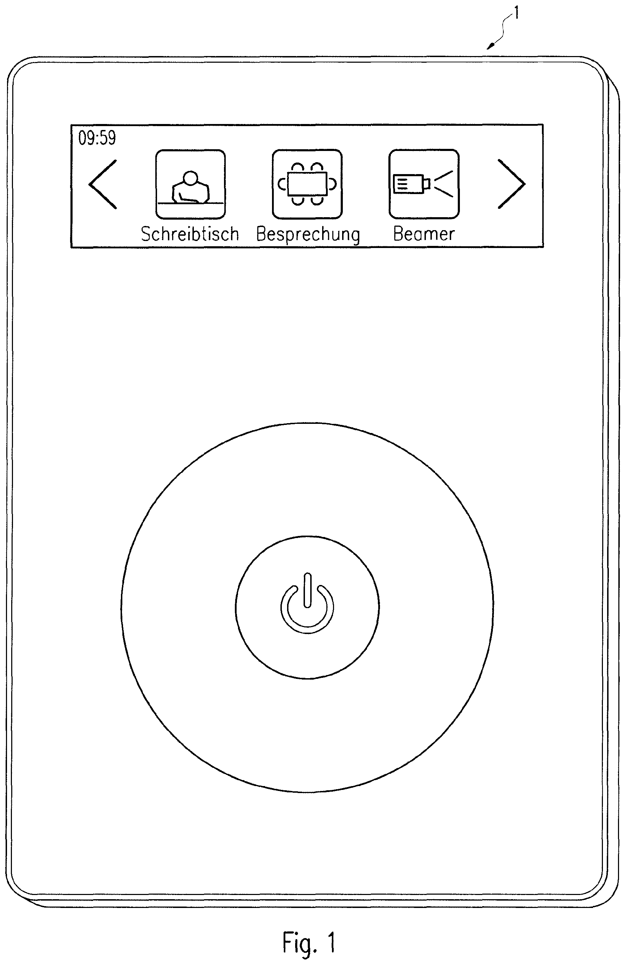

Fig. 1 zeigt eine Frontansicht eines Ausführungsbeispiels eines erfindungsgemäßen Bediengeräts 1 zum Steuern von mehreren elektrisch steuerbaren Aktoren, beispielsweise Betriebsgeräte von Leuchten und/oder Jalousien. Weitere Beispiele für derartige mögliche Aktoren sind Dimmeranlagen, Klimageräte, Heizungen, Vorhänge, Fenster, Leinwände sowie sonstige Geräte der Gebäudetechnik.

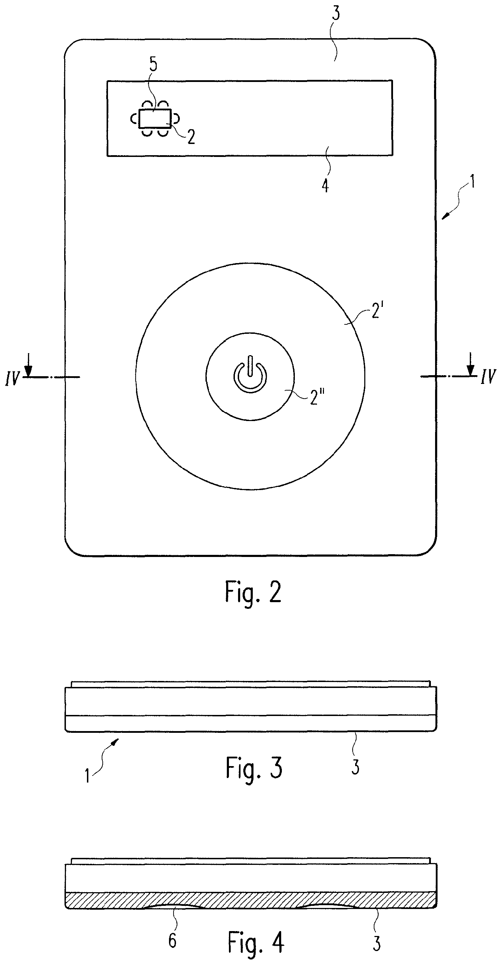

In Fig. 2 ist eine der Fig. 1 entsprechende Skizze gezeigt.

Das Bediengerät 1 weist Mittel zum Senden von Steuersignalen zur Steuerung der Aktoren auf. Dies entspricht an sich dem Stand der Technik; daher ist hierauf an dieser Stelle nicht näher eingegangen. Beispielsweise kann also vorgesehen sein, dass mit dem Bediengerät ein Leuchtmittel oder eine bestimmte Gruppe von Leuchtmitteln eingeschaltet werden kann, so dass bestimmte, vorab festgelegte "Lichtstimmungen" aktiviert werden können. Auch kann vorgesehen sein, dass mit dem Bediengerät eine Jalousie oder eine Gruppe von Jalousien verstellt werden kann oder dergleichen. Das Bediengerät kann dabei zur Beleuchtungs- bzw. Aktorensteuerung von einem oder von mehreren Räumen vorgesehen sein. Allgemein kann also das Bediengerät im Rahmen eines Lichtmanagementsystems oder eines Gebäudemanagementsystems verwendet werden. Es kann insbesondere vorgesehen sein, dass die Steuersignale mithilfe eines Bussystems bzw. mittels Buskommunikation an die Aktoren gesendet werden.

Weiterhin weist das Bediengerät 1 ein Betätigungselement 2 auf, das dazu ausgelegt ist, bei einer Betätigung ein Steuersignal an zumindest einen der Aktoren zu senden. Das Betätigungselement 2 ist dabei derart angeordnet, dass es von einer Frontseite 3 des Bediengeräts 1 aus betätigt werden kann. In Fig. 3 ist eine Ansicht von oben skizziert, in der die Frontseite 3 erkennbar ist.

Weiterhin umfasst das Bediengerät 1 ein Display 4 zur Unterstützung einer Bedienung des Bediengeräts 1. Beispielsweise kann das Display 4 dazu ausgelegt sein, auf der Frontseite 3 des Bediengeräts 1 ein Symbol 5 anzuzeigen, das auf eine Wirkung hindeutet, die bei Betätigung des Betätigungselements 2 ausgelöst wird. Wie aus Fig. 1 hervorgeht, kann vorgesehen sein, dass mit dem Display mehrere derartige Symbole angezeigt werden können, wobei alternativ oder zusätzlich zur weiteren Verdeutlichung auch die Anzeige von Text vorgesehen sein kann.

Die Frontseite 3 des Bediengeräts 1 ist durch eine durchgehend geschlossene Platte gebildet. Das Display 4 ist in einem innerhalb von der Platte liegenden Bereich des Bediengeräts 1 angeordnet. Das Display 4 kann also - von vorne betrachtet - hinter der Platte angeordnet sein. Auf diese Weise lässt sich das Display 4 besonders gut geschützt in dem Bediengerät 1 anordnen. Die Platte kann insbesondere transparent oder semitransparent sein. Sie kann beispielsweise aus Glas oder aus Kunststoff bestehen.

Das Display 4 kann vorteilhaft eine OLED umfassen oder aus einer solchen bestehen.

Das Betätigungselement 2 ist vorzugsweise zwischen der Platte und dem Display 4 angeordnet und dabei zumindest teilweise transparent gestaltet. Auf diese Weise ist es möglich, dass - bei Blick auf die Frontseite 3 - das Betätigungselement 2 überlappend mit einem Symbol 5 angeordnet ist, das durch das Display 4 von außen erkennbar angezeigt wird. Dies erlaubt eine besonders intuitive Hilfestellung bei der Betätigung des Betätigungselements 2 und trägt somit zu einer besonders einfachen Bedienung des Bediengeräts 1 bei.

Besonders vorteilhaft ist es, wenn das Bediengerät 1 eine kapazitive, insbesondere transparente kapazitive Folie aufweist, die zur Realisierung des Betätigungselements 2 dient. Die Folie kann dabei einen Teilbereich oder ein "Segment" aufweisen, der bzw. das dem Betätigungselement 2 entspricht oder Teil des Betätigungselements 2 ist.

Es können auch mehrere Betätigungselemente 2, 2', 2" vorgesehen sein und eine entsprechende Anzahl von Segmenten der kapazitiven Folie, so dass jedem der Segmente der Folie jeweils eines der Betätigungselemente 2, 2', 2" entspricht. Dabei kann das Display 4 dazu ausgelegt sein, zu jedem der Betätigungselemente jeweils ein eigenes Symbol anzuzeigen. Die Oberfläche" auf der Frontseite 3 des Bediengeräts 1 kann auf diese Weise insgesamt als kapazitiver Sensor ausgeführt sein.

Die Unterteilung der Folie in entsprechende Bereiche bzw. Segmente kann beispielsweise matrixförmig sein.

Das Betätigungselement - im hier beschriebenen Beispiel exemplarisch anhand des Betätigungselements 2' gezeigt - kann einen Regler bzw. "Slider" darstellen, der beispielsweise zum Dimmen einer Leuchte vorgesehen ist. Der entsprechende Bereich der kapazitiven Folie ist dann vorzugsweise in Untersegmente bzw. Unterbereiche weiter unterteilt, so dass durch den Regler mehrere unterschiedliche Regelzustände eingestellt werden können, wobei jeder der Regelzustände jeweils einem der Unterbereiche zugeordnet ist. Das Betätigungselement 2' hat dabei vorteilhaft eine Ringform. Beispielsweise kann - wie in Fig. 2 gezeigt - vorgesehen sein, dass das Betätigungselement 2' - bei Blick auf die Frontseite 3 - kreisringförmig ist. Die Unterbereiche können dann dementsprechend jeweils die Form eines Abschnitts des entsprechenden Kreisrings haben.

In Fig. 4 ist ein Schnitt durch die in Fig. 1 angegebene Linie IV - IV skizziert. Wie aus Fig. 4 erkennbar, kann vorgesehen sein, dass das Betätigungselement 2' auf der Frontseite 3 durch eine Einbuchtung 6 der Platte hervorgehoben bzw. markiert ist.

Die Einbuchtung 6 kann beispielsweise durch Einschleifen gebildet sein. Die durch die Einbuchtung 6 gebildete vertiefte Fläche kann glatt, mattiert oder aufgeraut gestaltet sein.

In dem durch die Ringform des Betätigungselements 2' gebildeten Innenbereich kann ein weiteres Betätigungselement 2" vorgesehen sein, das beispielsweise zum Ein- und Ausschalten des Bediengeräts 1 vorgesehen ist bzw. zum Umschalten aus einem Stand-By-Modus in einen eingeschalteten Zustand sowie aus dem eingeschalteten Zustand in den Stand-By-Modus.

Hinter dem weiteren Betätigungselement 2" kann eine Beleuchtung dieses Elements, beispielsweise eine Hintergrundbeleuchtung vorgesehen sein, wobei diese Hintergrundbeleuchtung beispielsweise eine Leuchtdiode umfassen kann. Dabei kann weiterhin vorgesehen sein, dass die Hintergrundbeleuchtung aktiviert wird, sobald ausgehend vom ausgeschalteten Zustand des Bediengeräts 1 oder vom Stand-By-Modus durch Betätigung des weiteren Betätigungselements 2" das Bediengerät 1 eingeschaltet wird.

Alternativ kann vorgesehen sein, dass die Hintergrundbeleuchtung für das weitere Betätigungselement 2" nur im ausgeschalteten Zustand des Bediengeräts 1 aktiviert ist; dies kann beispielsweise als Orientierungshilfe dienen. Beim Einschalten des Bediengeräts 1 kann in diesem Fall vorgesehen sein, dass die Hintergrundbeleuchtung für das weitere Betätigungselement 2" ausgeschaltet wird. Gleichzeitig kann dann eine Aktivierung des Displays 4 vorgesehen sein, also beispielsweise ein Aufleuchten des Symbols 5.

Weiterhin kann das Bediengerät 1 einen (in den Figuren nicht gezeigten) Lichtsensor zur Erfassung von Umgebungslicht bzw. einen Helligkeitssensor aufweisen, wobei dann vorgesehen ist, dass in Abhängigkeit der so erfassten Helligkeit das Display 4 und/oder die Hintergrundbeleuchtung angesteuert werden. Dabei ist es von Vorteil, wenn das Display 4 bzw. die Hintergrundbeleuchtung dimmbar vorgesehen sind, so dass bei heller Umgebung - beispielsweise tagsüber in einem Meetingraum - Display 4 bzw. Hintergrundbeleuchtung heller erscheinen, um gut erkennbar zu sein und bei dunklerer Umgebung - beispielsweise nachts in einem Hotelzimmer - weniger hell, um nicht störend zu wirken. Dabei kann eine automatische Nachführung der Helligkeit des Displays 4 und/oder der Helligkeit der Hintergrundbeleuchtung vorgesehen sein.

Das Bediengerät 1 kann insbesondere zur Montage an einer Wand vorgesehen sein. Dabei kann es einen dosenartigen Einsatz umfassen, der dazu vorgesehen ist, in eine Vertiefung in der Wand montiert zu werden. In der auf diese Weise versenkt angeordneten Dose kann die Spannungsversorgung bzw. das Netzteil und die Hardware für die Buskommunikation bzw. die Busankopplung angeordnet sein.

Die Displayeinheit, umfassend die Platte und das Display 4, kann dann mechanisch lösbar mit der Dose bzw. der Spannungsversorgung und der Hardware verbunden vorgesehen sein. Beispielsweise kann hierfür eine Steckverbindung mit Federmechanik vorgesehen sein, so dass die Displayeinheit entsprechend aufgesteckt werden kann und hierdurch die Spannungsversorgung und die Ansteuerung des Displays 4 ermöglicht ist.

Beispielswiese kann vorgesehen sein, dass die Displayeinheit mittels hervorstehender Metallfedern breitschlüssig in die versenkte Dose eingesetzt und mechanisch befestigt werden kann.

## Patentansprüche

1. Bediengerät (1) zum Steuern von mehreren elektrisch steuerbaren Aktoren, beispielsweise Leuchten und/oder Jalousien, aufweisend
- Mittel zum Senden von Steuersignalen zur Steuerung der Aktoren,
- wenigstens ein Betätigungselement (2), wobei das Bediengerät (1) dazu ausgelegt ist, bei einer Betätigung des Betätigungselements (2) ein Steuersignal zu senden, wobei das Betätigungselement (2) zumindest teilweise transparent ist und wobei das Betätigungselement (2) derart angeordnet ist, dass es von einer Frontseite (3) des Bediengeräts (1) aus betätigt werden kann, sowie
- ein Display (4) zur Unterstützung einer Bedienung des Bediengeräts (1),
**dadurch gekennzeichnet,**
**dass** die Frontseite (3) des Bediengeräts (1) durch eine durchgehend geschlossene Platte gebildet ist und das Display (4) in einem innerhalb von der Platte liegenden Bereich des Bediengeräts (1) angeordnet ist,
wobei das Betätigungselement (2) zwischen der Platte und dem Display (4) angeordnet ist,
weiterhin aufweisend
- eine kapazitive Folie, wobei ein Bereich der kapazitiven Folie einen Teil des Betätigungselements darstellt,
wobei das Betätigungselement einen Regler darstellt und der Bereich der kapazitiven Folie entsprechend einstellbaren unterschiedlichen Regelzuständen weiter in Unterbereiche unterteilt ist,
wobei das Betätigungselement eine Ringform aufweist,
wobei die Ringform auf der Frontseite (3) der Platte durch eine Einbuchtung (6) oder eine Erhöhung markiert ist.

2. Bediengerät nach Anspruch 1,
wobei die Platte eine Kunststoff- oder Glasplatte ist.

3. Bediengerät nach Anspruch 1 oder 2,
bei dem das Display (4) eine OLED umfasst oder aus einer OLED besteht.

4. Bediengerät nach einem der vorhergehenden Ansprüche,
weiterhin aufweisend
- wenigstens ein weiteres Betätigungselement (2'),
wobei ein weiterer Bereich der kapazitiven Folie einen Teil des weiteren Betätigungselements (2') darstellt.

5. Bediengerät nach einem der vorhergehenden Ansprüche,
weiterhin aufweisend
- einen Helligkeitssensor zur Erfassung einer Helligkeit eines Umgebungslichts,
wobei das Bediengerät (1) dazu ausgelegt ist, eine Helligkeit des Displays (4) und/oder einer Beleuchtung des Betätigungselements (2) in Abhängigkeit von der erfassten Helligkeit zu regeln.

6. Bediengerät nach einem der vorhergehenden Ansprüche,
weiterhin aufweisend
- eine Spannungsversorgung und eine Hardware für eine Buskommunikation zu den Aktoren,
wobei die Platte mittels einer mechanisch lösbaren Verbindung mit der Spannungsversorgung und der Hardware verbindbar ist.

7. Bediengerät nach einem der vorhergehenden Ansprüche,
das zur Montage an einer Wand vorgesehen ist.

## Claims

1. Operating device (1) for controlling a plurality of electrically controllable actuators, such as luminaires and/or blinds, comprising
- means for sending control signals to control the actuators,
- at least one actuating element (2), wherein the operating device (1) is designed to send a control signal upon actuation of the actuating element (2), wherein the actuating element (2) is at least partially transparent and wherein the actuating element (2) is so arranged that it may be operated from a front side (3) of the operating device (1), as well as
- a display (4) for supporting operation of the operating device (1),
**characterized in that**
the front side (3) of the operating device (1) is formed by a continuous closed plate, while the display (4) is arranged in a region of the operating device (1) lying inside the plate,
wherein the actuating element (2) is arranged between the plate and the display (4),
further comprising
a capacitive foil, wherein a region of the capacitive foil forms part of the actuating element,
wherein the actuating element is a controller, and the region of the capacitive foil is further subdivided into subregions in accordance with different adjustable control states,
wherein the actuating element has a ring shape,
wherein the ring shape on the front side (3) of the plate is marked by an indentation (6) or an elevation.

2. Operating device according to claim 1,
wherein the plate is a plastic or glass plate.

3. Operating device according to claim 1 or 2,
wherein the display (4) comprises an OLED, or consists of an OLED.

4. Operating device according to one of the preceding claims,
further comprising
- at least one further actuating element (2'),
wherein a further region of the capacitive foil forms part of the further actuating element (2').

5. Control device according to one of the preceding claims,
further comprising
- a brightness sensor for detecting the brightness of an ambient light,
wherein the operating device (1) is designed to control the brightness of the display (4) and/or the illumination of the actuating element (2) as a function of the detected brightness.

6. Operating device according to one of the preceding claims, further comprising
- a power supply and hardware for bus communication to the actuators,
wherein the plate may be connected to the power supply and the hardware by means of a mechanically detachable connection.

7. Operating device according to one of the preceding claims, wherein it is designed for mounting on a wall.

## Revendications

1. Dispositif de commande (1) pour la commande de plusieurs actionneurs à commande électrique, par exemple des luminaires et/ou des stores, comprenant :
- des moyens pour l'envoi de signaux de commande pour la commande des actionneurs,
- au moins un élément d'actionnement (2), le dispositif de commande (1) étant conçu pour envoyer, lors d'un actionnement de l'élément d'actionnement (2), un signal de commande, l'élément d'actionnement (2) étant au moins partiellement transparent et l'élément d'actionnement (2) étant disposé de façon à ce qu'il puisse être actionné à partir d'une face frontale (3) du dispositif de commande (1), ainsi que
- un affichage (4) pour faciliter l'utilisation du dispositif de commande (1),
**caractérisé en ce que**
la face frontale (3) du dispositif de commande (1) est constituée d'une plaque fermée continue et l'affichage (4) est disposé dans une zone du dispositif de commande (1) disposée à l'intérieur de la plaque,
l'élément d'actionnement (2) étant disposé entre la plaque et l'affichage (4), comprenant en outre
- un film capacitif, une zone du film capacitif constituant une partie de l'élément d'actionnement,
l'élément d'actionnement constituant un régulateur et la zone du film capacitif étant divisée en sous-zones en fonction de différents états de régulation réglables,
l'élément d'actionnement présentant une forme annulaire,
la forme annulaire étant marquée sur la face frontale (3) de la plaque par une échancrure (6) ou une surélévation.

2. Dispositif de commande selon la revendication 1,
la plaque étant une plaque en matière plastique ou en verre.

3. Dispositif de commande selon la revendication 1 ou 2,
dans lequel l'affichage (4) comprend une OLED ou est constitué d'une OLED.

4. Dispositif selon l'une des revendications précédentes,
comprenant en outre
- au moins un autre élément d'actionnement (2'),
une autre zone du film capacitif constituant une partie de l'autre élément d'actionnement (2').

5. Dispositif de commande selon l'une des revendications précédentes, comprenant en outre
- un capteur de luminosité pour la mesure d'une luminosité d'une lumière ambiante, le dispositif de commande (1) étant conçu pour réguler une luminosité de l'affichage (4) et/ou un éclairage de l'élément d'actionnement (2) en fonction de la luminosité mesurée.

6. Dispositif de commande selon l'une des revendications précédentes, comprenant en outre
- une alimentation en tension et un matériel pour une communication par bus avec les actionneurs,
la plaque pouvant être reliée au moyen d'une liaison mécaniquement amovible avec l'alimentation en tension et le matériel.

7. Dispositif de commande selon l'une des revendications précédentes,
qui est destiné à être monté sur un mur.
